# EUROPEAN PATENT APPLICATION

(11) **EP 4 292 942 A2**
(43) Date of publication of application: **20.12.2023**
(21) Application number: 23178778.9
(22) Date of filing: 12.06.2023
(51) Int. Cl.: B64D 37/20, B64D 37/30, F04F 5/20, F04F 5/10

(54) **AIRCRAFT SYSTEM, AIRCRAFT FUEL SYSTEM AND METHOD**

(30) Priority: 13.06.2022 GB 202208628
(71) Applicant: Airbus Operations Limited, Bristol BS34 7PA (GB)
(72) Inventor: THORNER, Callum, Bristol, BS34 7PA (GB); JAMES, Dylan, Bristol, BS34 7PA (GB); SAVIN, David, Bristol, BS34 7PA (GB)
(74) Representative: EIP

(57) **Abstract**

Disclosed is an aircraft system for handling cryogenic liquid. The aircraft system comprises a vessel configured to store cryogenic liquid, and a vacuum ejector operable to cause at least some of the cryogenic liquid to be moved from the vessel.

## Description

### TECHNICAL FIELD

The present invention relates to aircraft systems, particularly aircraft fuel systems for aircraft, as well as methods of handling cryogenic liquids in aircraft systems.

### BACKGROUND

Aircraft engines typically consume petroleum-based fuel, such as kerosene. The fuel is typically pumped from a fuel tank to an engine of the aircraft, where it is combusted to drive a turbine of the engine. The turbine, in turn, causes a fan to rotate to provide a propulsive force for the aircraft.

Alternative fuels, such as aviation biofuel, have been proposed as more sustainable alternatives to petroleum-based fuels. Blended biofuels comprising a percentage of biofuel, such as 50% biofuel, may also be used.

There is a desire to further reduce a carbon footprint of aircraft, and provide more sustainable aircraft fuels.

### SUMMARY

A first aspect of the present invention provides an aircraft system for handling cryogenic liquid, the aircraft system comprising: a vessel configured to store cryogenic liquid; and a vacuum ejector operable to cause at least some of the cryogenic liquid to be moved from the vessel.

The aircraft system may be referred to herein as "the system". The vacuum ejector may have no moving parts in a fluid flow path through the vacuum ejector between an inlet to the vacuum ejector from the vessel and an outlet of the vacuum ejector. Providing the vacuum ejector to move the cryogenic liquid from the vessel may thereby improve longevity of the aircraft system. This may be by the vacuum ejector being more resilient than an alternative fluid mover, such as a pump having moving parts and/or dynamic seals, to cavitation of the cryogenic liquid as the cryogenic liquid is caused to be moved from the vessel. Moreover, the vacuum ejector may be capable of providing a more consistent pressure and/or flow rate of the cryogenic liquid from the vessel than such an alternative fluid mover, even in the event of such cavitation.

The vacuum ejector may be configured to cause a portion of the cryogenic liquid in the vessel, in the vacuum ejector, and/or in a connection between the vessel and the vacuum ejector, to vaporise. In particular, operation of the vacuum ejector to cause the cryogenic liquid to be moved from the vessel may cause the portion of the cryogenic liquid to be vaporised. This may particularly be the case when the vessel is storing saturated cryogenic liquid in a saturated state, in which any reduction in pressure without a change in temperature may cause the portion of the cryogenic liquid subject to the reduction in pressure to vaporise. As such, operation of the vacuum ejector may cause a reduction in pressure of the portion of the cryogenic liquid, thereby vaporising the portion of the cryogenic liquid.

The portion of the cryogenic liquid that is vaporised may absorb heat from remaining cryogenic liquid, such as to cool the remaining cryogenic liquid. The heat absorbed from the remaining cryogenic liquid may be equivalent to the latent heat of evaporation of the portion of the cryogenic liquid that is vaporised. In this way, the remaining cryogenic liquid may be subcooled below its saturation temperature at a pressure in the vessel. The vacuum ejector may be operable to cause the remaining cryogenic liquid that is subcooled to be moved from the vessel. Alternatively, or in addition, the vaporisation of the cryogenic liquid and/or the subcooling of remaining cryogenic liquid may occur in an outlet of the vessel, or in the vacuum ejector itself, such as downstream of the outlet of the vessel.

During operation of the vacuum ejector, at least some of the portion of the cryogenic liquid that is vaporised may remain in the vessel. In any event, as discussed above, the vacuum ejector may be better able than alternative fluid movers to move any cryogenic liquid that has been vaporised from the vessel. and/or may provide a higher-quality supply of cryogenic liquid downstream of the vacuum ejector. Moreover, the vacuum ejector may be more resilient to any re-condensation of vaporised cryogenic liquid in the vacuum ejector than alternative fluid movers, particularly alternative fluid movers having moving parts and/or dynamic seals, which may become damaged due to a rapid and violent collapse of vaporised cryogenic liquid bubbles. That is, the vacuum ejector may be less susceptible to cavitation damage. As such, the aircraft system comprising the vacuum ejector may have improved longevity, particularly when handling saturated cryogenic liquids, which are prone to cavitation.

Optionally, the aircraft system comprises a pump downstream of the vacuum ejector. In this way, the cryogenic liquid may be caused to move from the vessel to the pump by the vacuum ejector. Optionally, the vacuum ejector is operable to pressurise the at least some of the cryogenic liquid caused to be moved from the vessel. Optionally, the vacuum ejector is fluidically connected directly to the pump, such as via a direct fluid line. Optionally, the vacuum ejector is connected to the pump via the direct fluid line without being connected to the pump via a further vessel, or tank, located between the vacuum ejector and the pump, or between the vessel and the pump. In this way, the pump may be configured to receive cryogenic liquid that has been pressurised by the vacuum ejector.

Optionally, an outlet of the vacuum ejector is fluidically connected to the vessel, so that the vacuum ejector causes the cryogenic liquid to be moved from the vessel, through the vacuum ejector, and back into the vessel. In some such instances, the outlet of the vacuum ejector may be arranged in the vessel in proximity to, or may be connected to, a port in the vessel for passing cryogenic liquid from the vessel to the pump. Optionally, the pump comprises first and second inlets. The first inlet may be connected to the outlet of the vacuum ejector, to receive cryogenic liquid from the vacuum ejector. The second inlet may be connected to the port in the vessel, to receive cryogenic liquid from the vessel. Optionally, a portion of the cryogenic liquid received by the pump, in use, is cryogenic liquid which has been passed through the vacuum ejector, and another portion of the cryogenic liquid received by the pump, in use, is cryogenic liquid from the vessel.

Optionally, the vacuum ejector is connected to the pump via a further vessel, or tank, located between the vacuum ejector and the pump. In some such instances, the vacuum ejector may be a part of a pre-pump unit, for moving the cryogenic liquid from the vessel to the further vessel. In this way, the further vessel may be configured to store cryogenic liquid that has been pre-pressurised by the vacuum ejector.

In any event, the cryogenic liquid received by the pump, either partially or wholly from the vacuum ejector, may be subcooled cryogenic liquid, which may reduce a likelihood of cavitation in, or upstream of, the pump. In other words, the vacuum ejector may be better able to handle a vapour fraction in the cryogenic liquid than the pump, and so may be used to increase a pressure of, and thereby subcool, the cryogenic liquid upstream of the pump. This may improve a longevity and/or efficiency of the pump.

Optionally, the pump comprises a centrifugal pump. The centrifugal pump may have fewer contacting moving surfaces than alternative pumps, such as positive displacement pumps. For example, positive displacement pumps, which repeatedly enclose a fixed volume of fluid and move it mechanically through a system, may comprise pistons and/or contacting rotating gears which require lubrication to operate effectively. A centrifugal pump, in contrast, may comprise a rotating impeller which transfers rotational energy into the fluid, and may require less, or no, lubrication. In this way, the centrifugal pump may provide improved longevity when handling cryogenic liquids, which may not be able to be lubricated effectively - if at all - at the low temperatures involved.

Moreover, certain cryogenic liquids, such as liquid hydrogen, may comprise small molecules which are more prone than other liquids, such as oil, water, and fuels such as kerosene, to leakage through connectors and seals in the aircraft system. The centrifugal pump may comprise fewer, or no, dynamic seals compared to alternative pumps, such as positive displacement pumps, and so may reduce a likelihood of leakage of the cryogenic liquid. This may improve a safety of the aircraft system, particularly when the cryogenic liquid is flammable, such as is the case with liquid hydrogen.

The cryogenic pump may be relatively small and/or lightweight compared to alternative pumps, such as positive displacement pumps, and so may be particularly beneficial for use in aircraft systems where space and/or weight is at a premium, such as an aircraft fuel system.

Optionally, the vacuum ejector comprises an entrained fluid inlet configured to receive cryogenic liquid from the vessel. Optionally, the vacuum ejector comprises a motive fluid inlet configured to receive cryogenic liquid from the pump. Optionally, the aircraft system comprises a channel fluidically connected, or connectable, between an outlet of the pump and the motive fluid inlet, such that some of the cryogenic liquid caused to be moved by the pump is passable to the motive fluid inlet of the vacuum ejector via the channel.

In other words, the motive fluid may be cryogenic liquid recirculated from the pump via the channel. This may reduce a weight, cost and/or complexity of the aircraft system, such as by not requiring a further pump and/or fluid source for providing the cryogenic liquid to the motive fluid inlet. In cases where only some of the cryogenic liquid received by the pump, in use, is from the vacuum ejector, an amount of cryogenic liquid required to be passed from the pump to the motive fluid inlet via the channel, as a proportion of the total flow produced by the pump, may be reduced. This may lead to a smaller pump being required than when the pump receives cryogenic liquid from the vessel only via the vacuum ejector, thereby reducing a size, cost and/or weight of the system.

More broadly, the motive fluid inlet may be for receiving a motive fluid, which in this case is the cryogenic liquid, from a motive fluid source, which in this case is the further pump. Alternatively, the motive fluid source may be any other suitable motive fluid source, such as another vacuum ejector, or a motive fluid pump for pumping cryogenic liquid, or any other suitable motive fluid, from the vessel or a further vessel. Optionally, the motive fluid inlet comprises a nozzle for injecting the motive fluid into the vacuum ejector.

Optionally, the vacuum ejector comprises a flow restrictor downstream of the motive fluid inlet and the entrained fluid inlet. Optionally, the vacuum ejector comprises a diffuser downstream of the flow restrictor. Optionally, the flow restrictor and diffuser together form a Venturi tube, configured to restrict and expand the cryogenic liquid flowing therethrough. In this way, the vacuum ejector makes use of the so-called Venturi effect to increase a velocity of the motive fluid entering the vacuum ejector, thereby reducing a pressure in the vacuum ejector, in particular in proximity to the entrained fluid inlet. This may also improve mixing of the cryogenic liquid received from the vessel via the entrained fluid inlet and the cryogenic liquid received from the motive fluid inlet. This may, in turn, provide a more even temperature distribution in the cryogenic liquid supplied to the pump, such as to provide more even sub-cooling of the cryogenic liquid supplied to the pump. The diffuser may allow the mixed cryogenic liquid to expand, so as to reduce a velocity and increase a pressure of the cryogenic liquid supplied to the pump. An outlet of the diffuser may be connected directly to an inlet of the pump. In this way, the increased pressure of the cryogenic liquid provided by the diffuser may further reduce a likelihood of cavitation occurring in proximity to the pump, and/or may allow the cryogenic liquid to be stored in the vessel at a lower pressure than would otherwise be desirable, or possible, if the vacuum ejector were not present.

Optionally, the vessel is thermally insulated. Optionally, the vessel is a vacuum-insulated vessel. Optionally, the vacuum-insulated vessel comprises an inner and an outer wall separated by a space, wherein a vacuum is present in the space. Optionally, the vessel is a non-vacuum-insulated vessel. Optionally, the vessel is thermally insulated using foam and/or multi-layer insulation, which may at least partially, if not entirely, surround the vessel.

By insulating the vessel, the cryogenic liquid may remain subcooled, such as to remain below its saturation temperature for a given pressure in the vessel, for a longer period of time. For instance, the vessel may be filled with subcooled cryogenic liquid, which may increase in temperature over time due to heat exchange between the cryogenic liquid in the vessel and an external atmosphere outside of the vessel. By providing a thermally-insulated vessel, a rate of increase in the temperature of the cryogenic liquid may be reduced.

Optionally, the vessel is hermetically sealed. Optionally, the vessel is a pressure vessel. The vessel may be configured to store cryogenic liquid at a pressure above atmospheric pressure. In particular, the vessel may be configured to store cryogenic liquid at a pressure of up to 2 bar, up to 5 bar, up to 7 bar, or greater than 7 bar. By storing cryogenic liquid at an elevated pressure, it may be possible to, or easier to, maintain the cryogenic liquid in a subcooled state at that pressure. For instance, increasing a pressure of the cryogenic liquid may increase a saturation temperature of the cryogenic liquid, meaning that the cryogenic liquid can be stored in the liquid phase at a higher temperature.

Optionally, the aircraft system, and/or the vessel comprises a pressure relief valve that is operable to reduce a pressure in the vessel. The pressure relief valve may be a check valve, and/or may be an electronically-controlled valve. The pressure relief valve may be configured to maintain a pressure of the cryogenic liquid in the vessel at a predefined pressure, such as at a pressure of up to 2 bar, up to 5 bar, up to 7 bar, or greater than 7 bar. In this way, in the event of an increase in pressure in the vessel, such as due to a vaporisation of some of the cryogenic liquid in the vessel, particularly when the cryogenic liquid is stored at its saturation temperature in the vessel, the pressure relief valve may reduce the pressure in the vessel, such as to maintain the cryogenic liquid in a saturated condition in the vessel. That is, the vessel may be configured to store the cryogenic liquid in a saturated state, such as by being hermetically sealed, by being thermally insulated, and/or by comprising the pressure regulation valve. Optionally, the aircraft system is configured to allow cryogenic liquid, or vaporised cryogenic liquid, to pass from the vessel to an external atmosphere, but to prevent the external atmosphere from entering the vessel. Optionally, this is by the aircraft system and/or the vessel being absent any valve for permitting the external atmosphere to passively enter the vessel, such as to increase a pressure in the vessel.

Optionally, the system comprises the cryogenic liquid in the vessel. Optionally, the cryogenic liquid is stored in the vessel at a pressure higher than that of an atmosphere surrounding the vessel. Optionally, the cryogenic liquid is stored in the vessel at a temperature and/or pressure corresponding to a subcooled condition, and/or a saturated condition, of the cryogenic liquid, in use.

Optionally, the cryogenic liquid is liquid hydrogen. Optionally, the liquid hydrogen is subcooled liquid hydrogen. Optionally, the liquid hydrogen is saturated liquid hydrogen. That is, the liquid hydrogen may be stored at a saturation temperature of the liquid hydrogen at a given pressure in the vessel. Liquid hydrogen may be used in particular where the aircraft system is, or is comprised in, an aircraft fuel system.

A second aspect of the present invention provides an aircraft fuel system comprising the aircraft system of the first aspect, wherein the vessel is configured to store cryogenic liquid as fuel for the aircraft.

As noted above, by using the vacuum ejector, it may be possible to improve a longevity of the aircraft fuel system, such as by reducing cavitation in or near moving parts of the aircraft fuel system, such as in the pump, where provided. By using the vacuum ejector to subcool the cryogenic liquid supplied to the pump, it may be possible to allow the cryogenic liquid to be stored under saturated conditions in the vessel, which may be the case as the temperature of the cryogenic liquid in the vessel gradually increases during flight of the aircraft. Moreover, such an aircraft fuel system may be relatively light-weight and easy to maintain, which is particularly beneficial for use in aircraft.

Optionally, the aircraft fuel system comprises a conduit for supplying fuel to an engine of the aircraft, wherein the vacuum ejector is operable to cause the cryogenic liquid to be moved from the vessel through the conduit, towards the engine.

Optionally, the pump, where provided, is located downstream of the jet pump and upstream of the conduit. In this way, the pump may be configured to receive the cryogenic liquid caused to move by the jet pump, such as cryogenic liquid pressurised by the jet pump, and then cause the cryogenic liquid to move through the conduit towards the engine. In this way, the pump may provide pressurised cryogenic liquid to the engine.

It will be appreciated that the aircraft fuel system may comprise any of the optional features of the first aspect, and/or may benefit from any of the advantages ascribed to the first aspect.

A third aspect of the present invention provides an aircraft comprising the aircraft system of the first aspect, or the aircraft fuel system of the second aspect. It will be appreciated that the aircraft may comprise any of the optional features of either of the first and second aspects, and/or may benefit from any of the advantages ascribed to either of the first and second aspects.

A fourth aspect of the present invention provides a method of handling saturated cryogenic liquid, the method comprising: storing the saturated cryogenic liquid in a vessel; causing at least a portion of the saturated cryogenic liquid to be moved from the vessel; and before, during and/or after the causing the at least a portion of the saturated cryogenic liquid to be moved from the vessel, causing a portion of the saturated cryogenic liquid that is moved, or that is to be moved, to be locally cooled to provide subcooled cryogenic liquid, wherein the causing the portion of the saturated cryogenic liquid to be locally cooled comprises causing saturated cryogenic liquid to be locally vaporised, such that heat from remaining saturated cryogenic liquid is absorbed by the cryogenic liquid vaporised to locally cool the remaining cryogenic liquid.

The causing saturated cryogenic liquid to be locally vaporised may be to cause the portion of the saturated cryogenic liquid to be locally cooled below its saturation temperature at a pressure in the vessel, and/or at a location downstream of the vessel, to provide the subcooled cryogenic liquid. Optionally, the causing the portion of the saturated cryogenic liquid to be locally cooled comprises causing the portion of the saturated cryogenic liquid to be locally cooled at a location in the vessel, such as before the causing the portion of the saturated cryogenic liquid to be moved from the vessel, specifically by causing saturated cryogenic liquid in proximity to the location to be vaporised. Optionally, the causing the saturated cryogenic liquid to be moved from the vessel causes the vaporisation of saturated cryogenic liquid and subsequent local cooling of the portion of the saturated cryogenic liquid.

Optionally, the portion of the saturated cryogenic liquid is caused to be locally cooled in proximity to an outlet of the vessel, such as in the outlet, and/or immediately upstream or downstream of the outlet, specifically by vaporising saturated cryogenic liquid in and/or in proximity to the outlet. Optionally, all of the saturated cryogenic liquid that is caused to be moved from the vessel is locally cooled by vaporising proximal saturated cryogenic liquid to provide the subcooled cryogenic liquid. Optionally, only some of the saturated cryogenic liquid that is caused to be moved from the vessel is locally cooled by vaporising proximal saturated cryogenic liquid to provide the subcooled cryogenic liquid.

As discussed above with reference to the first aspect, subcooled cryogenic liquid is less likely to vaporise and/or cavitate as it is passed through components downstream of the vessel than saturated cryogenic liquid. As such, locally subcooling the portion of the saturated cryogenic liquid, which may be supplied to such downstream components, by vaporising proximal saturated cryogenic liquid, may improve a longevity of the components. The method may also allow the cryogenic liquid to be stored in the saturated state in the vessel, which may reduce or eliminate a requirement to maintain the cryogenic liquid in a subcooled state in the vessel.

Optionally, the causing the saturated cryogenic liquid to be vaporised comprises causing the saturated liquid to be isothermally vaporised, such as vaporised at a constant temperature. The heat that is absorbed by the cryogenic liquid vaporised may be equivalent to a latent heat of vaporisation of the cryogenic liquid vaporised. The remaining saturated cryogenic liquid may experience a reduction in sensible heat, so as to locally reduce a temperature of the remaining cryogenic liquid. Some, or all, of the cryogenic liquid vaporised may remain in the vessel, so that only the subcooled cryogenic liquid is caused to be moved from the vessel. Alternatively, some of the cryogenic liquid vaporised may be caused to be moved from the vessel.

Optionally, the causing the saturated cryogenic liquid to be locally vaporised comprises causing a reduction in a pressure of the saturated cryogenic liquid to be locally vaporised. The reduction in pressure may be caused to occur in the vessel, in the outlet of the vessel, and/or upstream and/or downstream of the outlet of the vessel.

Optionally, the causing the reduction in the pressure of the saturated cryogenic liquid to be vaporised comprises using a vacuum ejector to reduce the pressure of the saturated cryogenic liquid to be vaporised.

In this way, the reduction in pressure may be caused to occur in the vacuum ejector, such as downstream of the outlet. The causing the saturated cryogenic liquid to be vaporised may comprise causing saturated cryogenic liquid in the vacuum ejector to be vaporised. The vacuum ejector may comprise few, or no, moving parts and/or dynamic seals, and so may be more resilient to cavitation of the cryogenic liquid caused to move therethrough, as described above with respect to the first aspect.

Optionally, the outlet is connected to an entrainment inlet of the vacuum ejector, and wherein the causing the reduction in the pressure of the saturated cryogenic liquid comprises causing the reduction in pressure of saturated cryogenic liquid in the entrainment inlet. The outlet of the vessel may correspond to the entrainment inlet of the vacuum ejector.

The method of the fourth aspect may be a method of handling saturated cryogenic liquid in the aircraft system of the first aspect and/or the aircraft fuel system of the second aspect. As such, the method, may comprise any of the optional features of, and/or benefit from any of the advantages ascribed to, the aircraft system of the first aspect, the aircraft fuel system of the second aspect and/or the aircraft of the third aspect.

A fifth aspect of the present invention provides a method of handling cryogenic liquid in an aircraft system, the method comprising: storing the cryogenic liquid in a vessel of the aircraft system; and moving, with a vacuum ejector of the aircraft system, at least some of the cryogenic liquid from the vessel.

Optionally, the method of the fifth aspect comprises any of the optional features of the fourth aspect, and/or may benefit from any of the advantages ascribed to the fourth aspect. For example, the method may be a method of handling cryogenic liquid in the aircraft system of the first aspect, and/or the aircraft fuel system of the second aspect.

### BRIEF DESCRIPTION OF THE DRAWINGS

Embodiments of the invention will now be described, by way of example only, with reference to the accompanying drawings, in which:
Figure 1 shows a schematic diagram of an aircraft, according to an example;
Figure 2 shows a schematic diagram of a fuel system, according to an example;
Figure 3 shows a schematic diagram of a vacuum ejector, according to an example;
Figure 4 shows an example method of handling saturated cryogenic liquid; and
Figure 5 shows an example method of handling cryogenic liquid.

### DETAILED DESCRIPTION

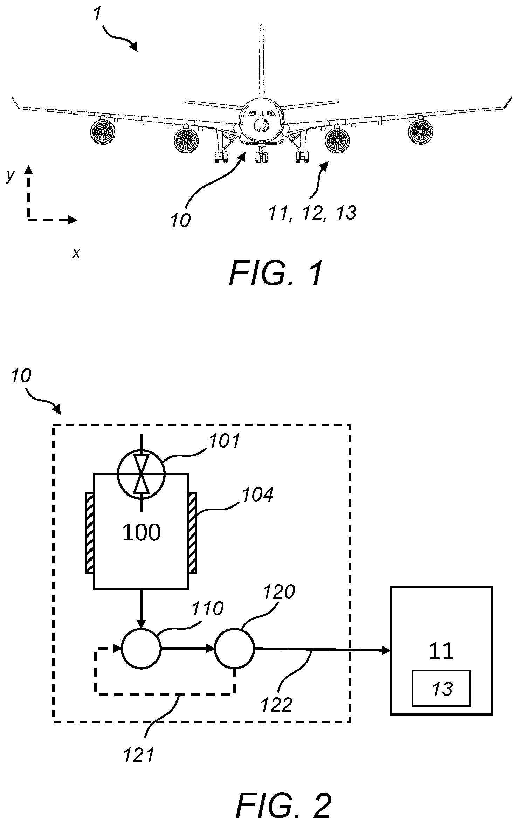

Figure 1 shows an example of an aircraft 1. The aircraft 1 comprises an aircraft fuel system 10, which may be referred to herein as simply a "fuel system 10", or "system 10". The aircraft 1 comprises a propulsion system 11, which here comprises four engines. The engines 12 are turbofan engines 12 mounted to a wing 13 of the aircraft 1. The engines 12 may alternatively be any other suitable aircraft engines 12, such as turboprop engines. Alternatively, the propulsion system 11 may be an electric propulsion system. The electric propulsion system may comprise electrically powered propulsors. In some examples, the aircraft 1 comprises a generator 13, which in this case is a part of an engine 12. In other examples, the generator 13 is separate from the engine 12. The generator is for generating electricity for various electrical systems of the aircraft 1, such as: an electric landing gear system for extending and/or retracting one or more landing gears of the aircraft 1; an electric braking system for braking one or more wheels of the aircraft 1; a control system for controlling one or more systems and/or components of the aircraft 1; one or more electrically operated control surfaces; and/or any other suitable electric system or component of the aircraft 1. In other examples, when the propulsion system 11 is an electric propulsion system 11, the generator 13 is for generating electrical energy for an electrically powered propulsor of the electric propulsion system 11. In some examples, the aircraft 1 comprises one or more batteries for receiving electrical energy from the generator 11, for storing the electrical energy, and/or for providing electrical energy stored by the one or more batteries to one or more of the various electrical systems described above.

Figure 2 shows an example of the fuel system 10, which comprises a vessel 100 for storing fuel for the aircraft, a vacuum ejector 110, and a pump 120. The fuel system 10 is configured to supply fuel from the vessel 100 to the propulsion system 11, specifically via the vacuum ejector 110, the pump 120, and a conduit 122. In some examples, the fuel system 10 is configured to supply fuel from the vessel 100 to the generator 13.

The fuel system 10 of the present example is configured to handle cryogenic liquid fuel, and specifically liquid hydrogen (LH2). Hydrogen (H2) must be cooled below its critical point of 33 K to exist as a liquid. At atmospheric pressure, the H2 must be cooled to below 20.28 K. As such, liquid hydrogen is an example of a cryogenic liquid. To be configured to handle cryogenic liquid fuel, the fuel system 10 comprises a hermetically sealed pressure vessel 100 (herein just "vessel"). The vessel 100 is configured to store pressurised cryogenic liquid, specifically pressurised liquid hydrogen. This is in contrast to conventional fuel systems of aircraft, which comprise fuel storage tanks which are vented to the atmosphere, to allow external air to replace spent fuel in the tanks.

The pressure vessel comprises a check valve 101, configured to reduce a pressure in the vessel 100. Specifically, the check valve 101 is configured to provide an upper limit of pressure in the vessel 100. A cracking pressure of the check valve 101 in the present example is 5 bar, but it may alternatively be up to 2 bar, up to 5 bar, up to 8 bar, or more than 8 bar. The cracking pressure of the check valve 101 may vary depending on the type of cryogenic liquid stored in the vessel. In other examples, the check valve 101 is instead an electrically operated valve, which may be operable to release pressure in the vessel 100 when the upper limit of pressure is reached, such as by utilising a pressure sensor (not shown) in the vessel 100. This is in contrast to conventional fuel systems, which, as noted above, comprise a fuel tank which is vented to the atmosphere, specifically to increase a pressure in the tank by replacing spent fuel with an external atmosphere from outside of the tank.

When the cryogenic liquid is at a temperature below its saturation temperature for a given pressure, it may be referred to as "subcooled" cryogenic liquid. It is to be noted that, while the vessel 100 may initially be filled, partially filled, and/or topped-up, with subcooled cryogenic liquid, the temperature of the cryogenic may increase over time, such as during a flight of the aircraft. This may lead to the cryogenic liquid reaching its saturation temperature at the pressure in the vessel. When this occurs, a further increase in temperature may lead to some of the cryogenic liquid in the vessel 100 vaporising. As gaseous hydrogen (for example) has a lower density than liquid hydrogen, and as the volume in the vessel 100 is fixed, the pressure in the vessel 100 may increase due to such vaporisation. This increase in pressure may be relieved by operation of the valve 100. This process may repeat, leading to the cryogenic liquid being stored in the vessel 100 in saturated conditions, such as at a temperature at which the liquid and gas phase of the cryogenic liquid can both exist for a given pressure. The vessel 100 in the present example is thermally insulated. In the example shown in Figure 2, a thermally insulating sleeve 104 is provided around the vessel 100. In other examples, the vessel is a double-walled vessel, comprising two walls and a space between the walls. The space between the walls may comprise the thermally insulating material 104, and/or may comprise a vacuum. A vacuum between the walls may limit a rate of heat transfer between one wall and the other, such as to reduce a rate of heat transfer from an external environment outside of the vessel into the cryogenic liquid in the vessel, in use.

If the cryogenic liquid is stored in a saturated state in the vessel 100, then any reduction in pressure of the cryogenic liquid, such as due to operation of a pump to draw the cryogenic liquid from the vessel 100, may cause the cryogenic liquid to vaporise. This is due to a pressure of the cryogenic liquid being caused to drop below a pressure at which the cryogenic liquid is in a saturated state for a given temperature. In other words, the pressure is caused to drop below a saturation curve, which is a curve of pressure and temperature along which the cryogenic liquid is in a saturated state. It is undesirable for a gas fraction to be present in the cryogenic liquid as it is passed through components downstream of the vessel 100, such as pumps and valves, as gaseous bubbles may collapse aggressively as pressure is increased. This aggressive collapse of gas bubbles may release shockwaves, which can subsequently damage and erode components such as pumps and valves in the fuel system 10. The presence of such gas bubbles may be referred to as "cavitation", while the damage caused by the collapse of such bubbles may be known as "cavitation damage". It may therefore be undesirable for saturated cryogenic liquid, which is particularly susceptible to cavitation, to be provided to components such as pumps, which may comprise delicate moving parts that are difficult to replace. The risk of cavitation is, however, reduced if the cryogenic liquid is moved in a subcooled state.

In the illustrated example, therefore, the fuel system 10 comprises the vacuum ejector 110 which is operable to cause the cryogenic liquid to be moved from the vessel 100, and specifically to cause the cryogenic liquid to be moved towards the pump 120. In the present example, the pump 120 is a centrifugal pump, although in other examples it may be any other suitable pump. The vacuum ejector 110 comprises no moving parts in a flow path between the entrainment inlet 111 and the outlet 121, and so is more resilient to cavitation damage than, for example, the centrifugal pump 120. The vacuum ejector 110 may therefore be better able to handle saturated cryogenic liquid received directly from the vessel 100. Moreover, by receiving (mostly) subcooled cryogenic liquid directly from the vacuum ejector 110, rather than receiving saturated cryogenic liquid directly from the vessel 100, the pump 120 may be less likely to incur cavitation damage, and may have improved longevity. It will be appreciated that the vacuum ejector 110 in the present example is connected directly to the centrifugal pump 120, and acts to boost the pressure of the cryogenic liquid provided to the centrifugal pump 120. Moreover, the fuel system 10 is absent any further vessel, or tank, fluidically connected between the vacuum ejector 110 and the pump 120, or between the vessel 110 and the pump 120.

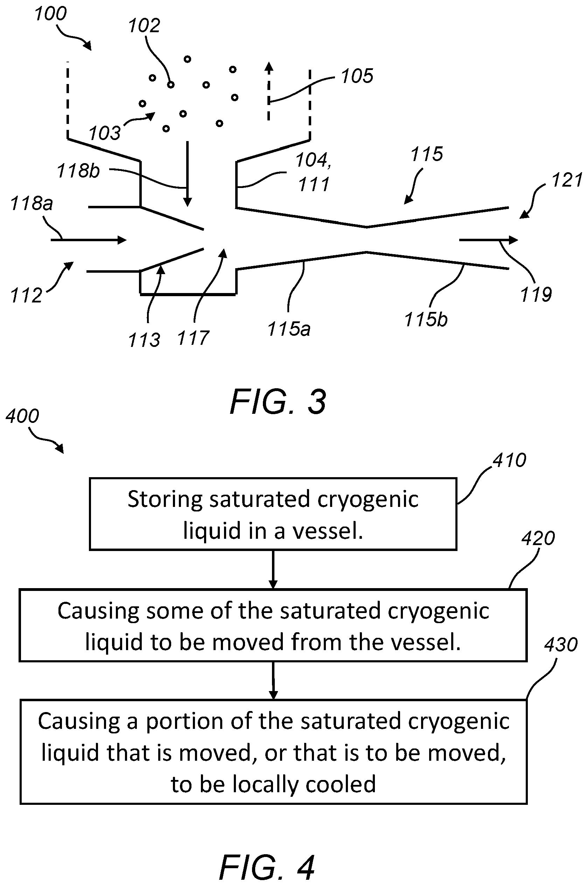

The vacuum ejector 110 is shown in more detail in Figure 3. Specifically, the vacuum ejector 110 comprises a motive fluid inlet 112 configured to receive a motive fluid as shown by the arrow 118a. In this example, the motive fluid is cryogenic liquid that is tapped off from the pump 120, and received via the channel 121 shown in Figure 2. The vacuum ejector 110 comprises a nozzle 113 and a chamber 117. The motive fluid is injected into the chamber 117 via the nozzle 113, such as to increase a velocity of the motive fluid. The increase in velocity causes a corresponding reduction in pressure in the motive fluid, and a subsequent reduction in pressure in the chamber 117. The vacuum ejector 110 also comprises a Venturi tube 115 comprising a converging section 115a and a diverging section 115b. The diverging section 115b may alternatively be referred to as a "diffuser". The motive fluid received via the motive fluid inlet 112 and the nozzle 113 may pass through the Venturi tube 115, which may further increase the velocity of, and reduce the pressure of, the motive fluid, in accordance with the Venturi effect.

The vacuum ejector 110 further comprises an entrained fluid inlet 111, which is connected to an outlet 104 of the vessel 100. In the example shown, the outlet 104 of the vessel 100 corresponds to the entrained fluid inlet 111 of the vacuum ejector 110. In other examples, the outlet 104 and entrained fluid inlet 111 may be separate, such as connected by a conduit. The reduction in pressure caused by the motive fluid passing through the vacuum ejector 110 may cause a subsequent reduction in pressure in, upstream and downstream of the chamber 117, such as in the entrained fluid inlet 111, in the outlet 104, and/or in the vessel 100 itself. This reduction in pressure may act to draw, or "entrain", the cryogenic liquid stored in the vessel into the vacuum ejector 110 via the entrained fluid inlet 111. The entrained cryogenic liquid may then mix with the motive fluid in the chamber 117 and pass through the Venturi tube 115. The Venturi tube 115 may cause further mixing of the entrained cryogenic liquid and the motive fluid, which here is cryogenic liquid from the pump 120. As the cryogenic liquid passes through the diverging section 115b, the velocity of the cryogenic liquid is reduced and the pressure of the cryogenic liquid is increased, such as to provide pressurised cryogenic liquid to the pump 120 and/or other components downstream of the vacuum ejector 110.

When the cryogenic liquid is stored in the vessel 100 in a saturated state, as described above, the localised reduction in pressure in any of the chamber 117, the entrainment inlet 111, the outlet 104, and/or the vessel 100 caused by operating the vacuum ejector 100 causes some of the saturated cryogenic liquid that is subject to the reduction in pressure to be vaporised. In the example shown in Figure 3, this vaporisation occurs in the vessel 100 in proximity to the outlet 104 and leads to the formation of vaporised cryogenic liquid 102. Alternatively, or in addition, the vaporisation and formation of vaporised cryogenic liquid 102 may occur in the outlet 104, and/or in the vacuum ejector 110, such as in the entrainment inlet 111, the vacuum chamber 117 and/or the Venturi tube.

As the saturated cryogenic liquid vaporises, heat energy equivalent to the latent heat of evaporation of the vaporised cryogenic liquid is absorbed from the remaining cryogenic liquid, which in Figure 3 is generally labelled as 103. The remaining cryogenic liquid 103 experiences a reduction in sensible heat, and therefore a reduction in temperature. In this way, the vaporisation of the saturated cryogenic liquid causes a subcooling of the remaining cryogenic liquid 103 below its saturation temperature. This subcooled saturated cryogenic liquid 103 is then moved, possibly along with some of the vaporised cryogenic liquid 102, through the vacuum ejector 110 and towards the pump 120. Some, or all, of the vaporised cryogenic liquid 102, being lighter than the surrounding cryogenic liquid, may then rise to the top of the vessel 100, such as in the direction of the arrow labelled 105 in Figure 3. This may particularly be the case when the vacuum ejector 110 is located at a bottom of the vessel 100, as shown in Figure 3. In this way, the cryogenic liquid cause to move through the vacuum ejector may be mostly, if not entirely, subcooled below its saturation temperature. This subsequently leads to (mostly) subcooled cryogenic liquid being supplied to the pump 120, thereby reducing a likelihood of cavitation in and/or around the pump 120, which as noted above may comprise more moving parts which are more susceptible to cavitation damage. This may, in turn, improve a longevity of the fuel system 10.

Moreover, the vacuum ejector 110 may be better able to withstand any cavitation which may occur in the vacuum ejector 110, such as during vaporisation of the saturated cryogenic liquid in the vacuum ejector 110, and/or as the cryogenic liquid is mixed with the motive fluid in the Venturi tube 115, and/or as the pressure of the cryogenic liquid is increased through the diverging section 115b. As such, receiving the cryogenic liquid from the vessel in the vacuum ejector before it is received in any other pump may further improve a longevity of the fuel system 10.

The fuel system 10 of Figure 2 may be located in any suitable location in the aircraft 1. For instance, the vessel 100, the vacuum ejector 110, the pump 120, the channel 121 and/or the conduit 122 may be located in a wing 13 of the aircraft 1, and/or in a fuselage 19 of the aircraft 1. The propulsion system 11 and/or any suitable part thereof, such as the generator 13, may similarly be located fully or partially in a wing 13 and/or the fuselage 19 of the aircraft.

Figure 4 shows an example method 400 of handling saturated cryogenic liquid in accordance with the discussion above. The method 400 comprises storing 410 the saturated cryogenic liquid in a vessel 100, such as the vessel 100 described above. The method 400 comprises causing 420 some of the saturated cryogenic liquid to be moved from the vessel 100, such as by using the vacuum ejector 110 described above. The method 400 also comprises, before during and/or after the causing 420 the some of the saturated cryogenic liquid to be moved from the vessel 100, causing 430 a portion of the saturated cryogenic liquid that is moved, or that is to be moved, to be locally cooled to provide subcooled cryogenic liquid. The causing 430 the portion of the saturated cryogenic liquid to be locally cooled comprises causing saturated cryogenic liquid to the locally vaporised, such that heat from remaining saturated cryogenic liquid is absorbed by the cryogenic liquid vaporised to locally cool the remaining cryogenic liquid, such as described above. In particular, this is by the method 400 comprising causing a reduction in a pressure of the saturated cryogenic liquid to be locally vaporised, specifically by using the vacuum ejector 110.

As discussed above, it will be understood that, in some examples, the portion of the saturated cryogenic liquid may be vaporised in the vessel 100 to provide the subcooled cryogenic liquid. Only the remaining subcooled cryogenic liquid may then be caused to move from the vessel 100. Alternatively, the remaining subcooled cryogenic liquid may be caused to move from the vessel 100 along with some of the cryogenic liquid vaporised. Alternatively, the saturated cryogenic liquid may first be caused to move from the vessel 100. Then, some of the saturated cryogenic liquid caused to be moved from the vessel 100 may be vaporised, such as in the vacuum ejector 110, and/or in a connecting portion 104, 111 between the vessel and the vacuum ejector 110. In some examples, the saturated cryogenic liquid is caused to be vaporised before, during and/or after it is caused to be moved from the vessel 100.

In some examples, the method 400 comprises mixing the cryogenic liquid caused to be moved from the vessel 100 with a motive fluid received in the vacuum ejector 110. In some examples, the method further comprises passing the cryogenic liquid caused to be moved from the vessel 100 to the pump 120, the conduit 122, and/or to the propulsion system 11, which as noted above may be any other suitable system of the aircraft 1 that may make use of the saturated cryogenic liquid. In some examples, the method 400 comprises regulating a pressure in the vessel 100, such as by causing operation of the valve 101 as described above. In other examples, the method 400 comprises reducing a rate of heat transfer between the cryogenic liquid in the vessel 100 and an external atmosphere surrounding the vessel 100, such as by thermally insulating the vessel 100 as described above.

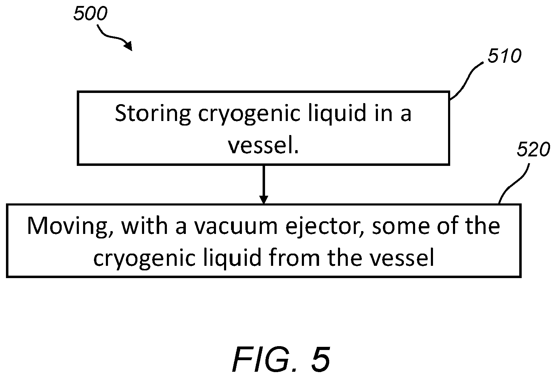

Figure 5 shows an example method 500 of handling cryogenic liquid in an aircraft system, such as the aircraft fuel system 10. The method 500 comprises storing 510 the cryogenic liquid in a vessel 100 of the aircraft system, such as the vessel 100 described above. The method 500 also comprises moving 520, with a vacuum ejector 110 of the aircraft system, such as the vacuum ejector 110 described above, the cryogenic liquid from the vessel 100. It will be understood that the method 500 may comprise any of the actions of the method 400 described above.

It is to be noted that the term "or" as used herein is to be interpreted to mean "and/or", unless expressly stated otherwise. Example embodiments of the present invention have been discussed, with particular reference to the examples illustrated. However, it will be appreciated that variations and modifications may be made without departing from the scope of the invention as defined by the appended claims.

## Claims

1. An aircraft system for handling cryogenic liquid, the aircraft system comprising:
a vessel configured to store cryogenic liquid; and
a vacuum ejector operable to cause at least some of the cryogenic liquid to be moved from the vessel.

2. The aircraft system according to claim 1, comprising a pump downstream of the vacuum ejector;
optionally, wherein the pump comprises a centrifugal pump.

3. The aircraft system according to claim 2, wherein the vacuum ejector is fluidically connected directly to the pump.

4. The aircraft system according to claim 2 or claim 3, wherein the vacuum ejector comprises an entrained fluid inlet configured to receive cryogenic liquid from the vessel, and a motive fluid inlet configured to receive cryogenic liquid from the pump, and
wherein the system comprises a channel fluidically connected, or connectable, between an outlet of the pump and the motive fluid inlet, such that some of the cryogenic liquid moved by the pump is passable to the motive fluid inlet of the vacuum ejector via the channel.

5. The aircraft system according to any one of claims 1 to 4, wherein the vessel is thermally insulated.

6. The aircraft system according to any one of claims 1 to 5, wherein the vessel is hermetically sealed; and
optionally, wherein the vessel comprises a pressure relief valve that is operable to reduce a pressure in the vessel, and the system is configured to prevent an external atmosphere from entering the vessel.

7. The aircraft system of any one of claims 1 to 6, comprising the cryogenic liquid in the vessel.

8. The aircraft system of any one of claims 1 to7, wherein the cryogenic liquid is liquid hydrogen.

9. An aircraft fuel system for an aircraft, the aircraft fuel system comprising the aircraft system of any one of claims 1 to 8, wherein the vessel is configured to store cryogenic liquid as fuel for the aircraft; and
optionally, wherein the aircraft fuel system comprises a conduit for supplying fuel to an engine of the aircraft, and the vacuum ejector is operable to cause the cryogenic liquid to be moved from the vessel through the conduit, towards the engine.

10. An aircraft comprising the aircraft system of any one of claims 1 to 8, or the aircraft fuel system of claim 9.

11. A method of handling saturated cryogenic liquid, the method comprising:
storing the saturated cryogenic liquid in a vessel;
causing at least a portion of the saturated cryogenic liquid to be moved from the vessel; and
before, during and/or after the causing the at least a portion of the saturated cryogenic liquid to be moved from the vessel, causing a portion of the saturated cryogenic liquid that is moved, or that is to be moved, to be locally cooled to provide subcooled cryogenic liquid, wherein the causing the portion of the saturated cryogenic liquid to be locally cooled comprises causing saturated cryogenic liquid to be locally vaporised, such that heat from remaining saturated cryogenic liquid is absorbed by the cryogenic liquid vaporised to locally cool the remaining cryogenic liquid.

12. The method of claim 11, wherein the causing the saturated cryogenic liquid to be locally vaporised comprises causing a reduction in a pressure of the saturated cryogenic liquid to be locally vaporised.

13. The method of claim 12, wherein the causing the reduction in the pressure of the saturated cryogenic liquid to be vaporised comprises using a vacuum ejector to reduce the pressure of the saturated cryogenic liquid to be vaporised;
optionally, wherein an outlet of the vessel is connected to an entrainment inlet of the vacuum ejector, and wherein the causing the reduction in the pressure of the saturated cryogenic liquid comprises causing the reduction in pressure of saturated cryogenic liquid in the entrainment inlet; and
optionally, wherein the causing some of the saturated cryogenic liquid to be moved from the vessel comprises causing some of the saturated cryogenic liquid to be moved from the vacuum ejector directly to a pump downstream of the vacuum ejector.

14. A method of handling cryogenic liquid in an aircraft system, the method comprising:
storing the cryogenic liquid in a vessel of the aircraft system; and
moving, with a vacuum ejector of the aircraft system, at least some of the cryogenic liquid from the vessel.

15. The method of claim 14, wherein the moving at least some of the cryogenic liquid from the vessel comprises moving some of the cryogenic liquid through the vacuum ejector from the vessel, and from the vacuum ejector directly to a pump downstream of the vacuum ejector.
